# EUROPEAN PATENT APPLICATION

(11) **EP 4 694 438 A1**
(43) Date of publication of application: **11.02.2026**
(21) Application number: 24785080.3
(22) Date of filing: 25.03.2024
(51) Int. Cl.: H04W 72/04, H04W 72/50, H04W 72/40, H04W 74/08, H04W 84/12, H04W 74/04

(54) **METHOD AND DEVICE FOR SHARING TXOP IN WIRELESS LAN SYSTEM**

(30) Priority: 03.04.2023 KR 20230043765; 03.04.2023 KR 20230043766
(71) Applicant: LG Electronics Inc., Yeongdeungpo-gu Seoul 07336 (KR)
(72) Inventor: JANG, Insun, Seoul 06772 (KR); CHUN, Jinyoung, Seoul 06772 (KR); CHOI, Jinsoo, Seoul 06772 (KR); BAEK, Sunhee, Seoul 06772 (KR); KIM, Geonhwan, Seoul 06772 (KR)
(74) Representative: Plasseraud IP
(86) International application number: PCT/KR2024/003702
(87) International publication number: WO 2024/210373

(57) **Abstract**

Disclosed are a method and device for sharing TXOP in a wireless LAN system. A method performed by a first AP according to one embodiment of the present disclosure may comprise the steps of: receiving a first trigger frame from a second AP, wherein the first trigger frame includes information about time allocated to the first AP within TXOP obtained by the second AP; and performing transmission or reception of STA and PPDU within the allocated time.

## Description

### [Technical Field]

The present disclosure relates to a method and an apparatus for sharing a transmission opportunity (TXOP) in a wireless local area network (WLAN) system.

### [Background Art]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [Disclosure]

### [Technical Problem]

A technical object of the present disclosure is to provide a method and an apparatus for sharing a TXOP acquired by one access point (AP) with one or more other APs.

In addition, an additional technical object of the present disclosure is to provide a method and an apparatus for setting a network allocation vector (NAV) in a TXOP sharing procedure.

The technical objects to be achieved by the present disclosure are not limited to the above-described technical objects, and other technical objects which are not described herein will be clearly understood by those skilled in the pertinent art from the following description.

### [Technical Solution]

A method performed by a access point (AP) in a wireless local area network (WLAN) system according to an aspect of the present disclosure may include: receiving a first trigger frame from a second AP, wherein the first trigger frame includes information for time allocated to the first AP within a transmission opportunity (TXOP) acquired by the second AP; and transmitting or receiving a physical protocol data unit (PPDU) with a station (STA) within the allocated time. A duration of the PPDU may be configured to time from an end of the PPDU to an end of the allocated time.

A method performed by a station (STA) in a wireless local area network (WLAN) system according to an additional aspect of the present disclosure may include: establishing an association with a first access point (AP); and performing transmission or reception of a physical protocol data unit (PPDU) with the first AP within time allocated to the first AP within a transmission opportunity (TXOP) acquired by the second AP. A duration of the PPDU may be configured to time from an end of the PPDU to an end of the allocated time.

### [Technical Effects]

According to an embodiment of the present disclosure, low-latency traffic transmission and reception is possible by sharing a TXOP with another AP, thereby reducing latency and improving wireless communication efficiency.

In addition, according to an embodiment of the present disclosure, a frame exchange operation within a shared TXOP can be protected according to appropriate NAV setting.

In addition, according to an embodiment of the present disclosure, transmissions by STAs within an AP that has been shared a TXOP can be prevented from being unnecessarily blocked according to appropriate NAV setting.

Effects achievable by the present disclosure are not limited to the above-described effects, and other effects which are not described herein may be clearly understood by those skilled in the pertinent art from the following description.

### [Brief Description of the Drawings]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 is a diagram illustrating an exemplary format of a trigger frame to which the present disclosure can be applied.
FIG. 9 is a diagram illustrating a format of a common information field within a trigger frame to which the present disclosure may be applied.
FIG. 10 illustrates a TXOP sharing procedure in a wireless LAN system to which the present disclosure may be applied.
FIG. 11 illustrates a user information field format of an MU-RTS TXS trigger frame to which the present disclosure may be applied.
FIG. 12 illustrates a TXOP sharing method according to an embodiment of the present disclosure.
FIG. 13 illustrates a TXOP sharing method according to an embodiment of the present disclosure.
FIG. 14 illustrates a TXOP sharing method according to an embodiment of the present disclosure.
FIG. 15 illustrates a TXOP sharing method according to an embodiment of the present disclosure.
FIG. 16 illustrates a TXOP sharing method according to an embodiment of the present disclosure.
FIG. 17 illustrates an operation of an access point for a TXOP sharing method according to an embodiment of the present disclosure.
FIG. 18 illustrates an operation of a station for a TXOP sharing method according to an embodiment of the present disclosure.

### [Detailed Description]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

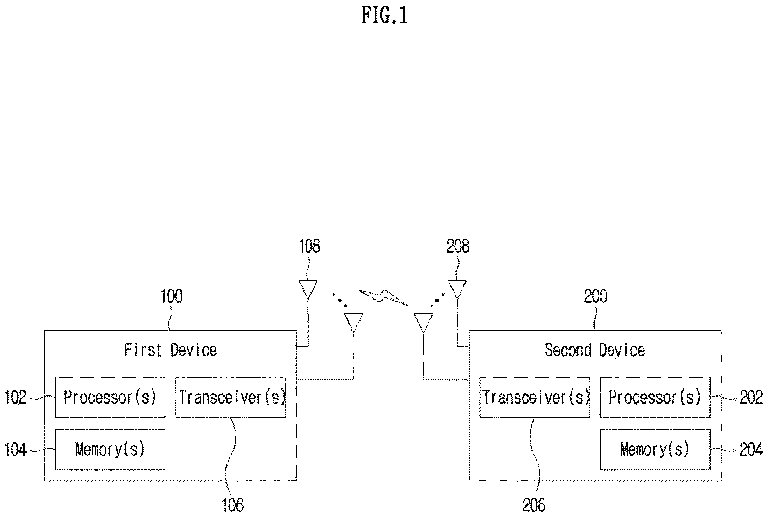

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/e ncoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

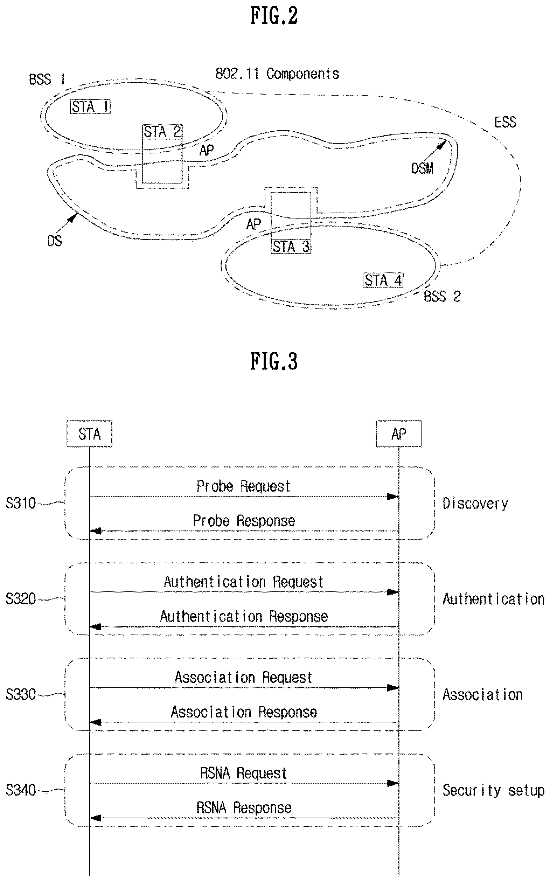

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

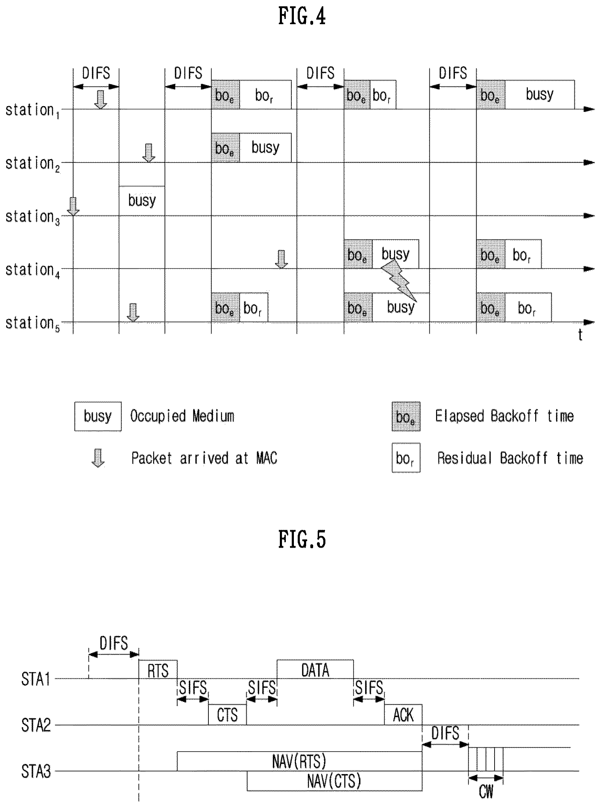

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

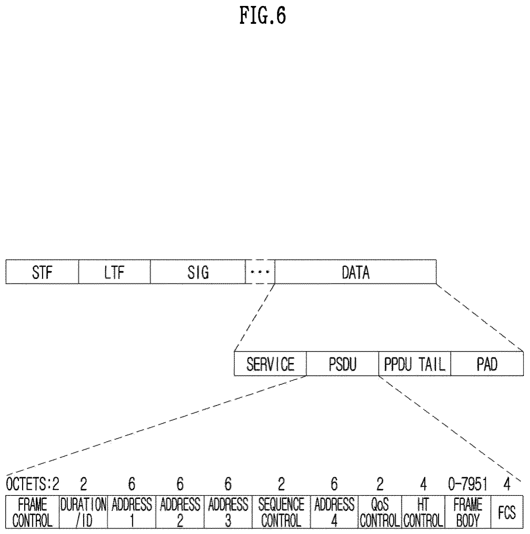

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

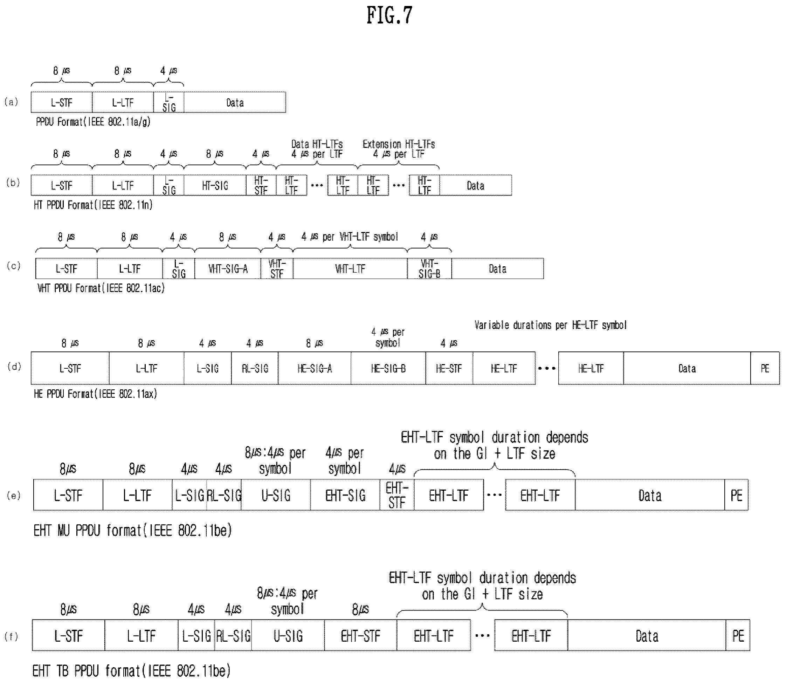

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### Trigger frame

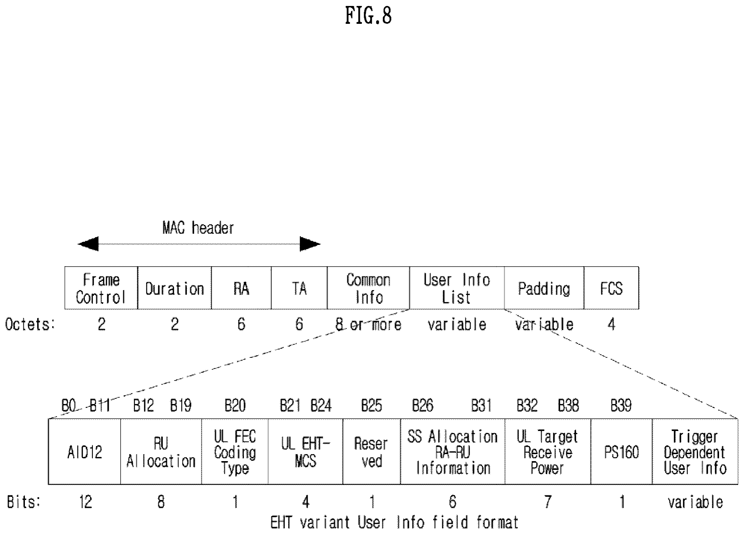

FIG. 8 is a diagram illustrating an exemplary format of a trigger frame to which the present disclosure can be applied.

A trigger frame may allocate resources for one or more TB PPDU transmissions and request TB PPDU transmissions. The trigger frame may also include other information required by an STA transmitting a TB PPDU in response thereto. The trigger frame may include common info and user info list fields in the frame body.

The common info field may include information that is commonly applied to one or more TB PPDU transmissions requested by the trigger frame, such as a trigger type, UL length, whether a subsequent trigger frame exists (e.g., More TF), whether CS (channel sensing) is required, UL BW (bandwidth), etc.

The 4-bit trigger type subfield can have values from 0 to 15. Among them, the values 0, 1, 2, 3, 4, 5, 6, and 7 of the trigger type subfield are defined to correspond to basic, Beamforming Report Poll (BFRP), multi user-block acknowledgment request (MU-BAR), multi user-request to send (MU-RTS), Buffer Status Report Poll (BSRP), groupcast with retries (GCR) MU-BAR, Bandwidth Query Report Poll (BQRP), and NDP Feedback Report Poll (NFRP), respectively, and the values 8 to 15 are defined as reserved.

Among the common information, the trigger dependent common info subfield can include information that is selectively included based on the trigger type.

A special user info field may be included within the trigger frame. The special user info field does not include user-specific information, but rather includes extended common information not provided in the common information field.

The user info list includess zero or more user info fields. FIG. 8 exemplarily illustrates an EHT variant user info field format.

The AID12 subfield basically indicates that it is a user information field for an STA having the corresponding AID. In addition, if the AID12 field has a predetermined specific value, it may be utilized for other purposes, such as allocating a random access (RA)-RU, or being configured in the form of a special user info field. The special user info field is a user information field that does not include user specific information but includes extended common information that is not provided in the common information field. For example, the special user info field can be identified by the AID12 value of 2007, and the special user info field flag subfield in the common information field can indicate whether the special user info field is included.

The RU allocation subfield can indicate the size and position of RU/MRU. For this purpose, the RU allocation subfield can be interpreted together with the PS160 (primary/secondary 160MHz) subfield of the user information field, the UL BW subfield of the common information field, etc.

### Transmission Opportunity (TXOP) Sharing Method for Multi-AP Operation

A non-EHT, non-AP HE STA interprets the common info field as a HE variant common info field. Furthermore, if B54 and B54 in the common info field are equal to 1, the non-AP EHT STA interprets the common info field as a HE variant common info field. Otherwise, the non-AP EHT STA interprets the common info field as an EHT variant common info field.

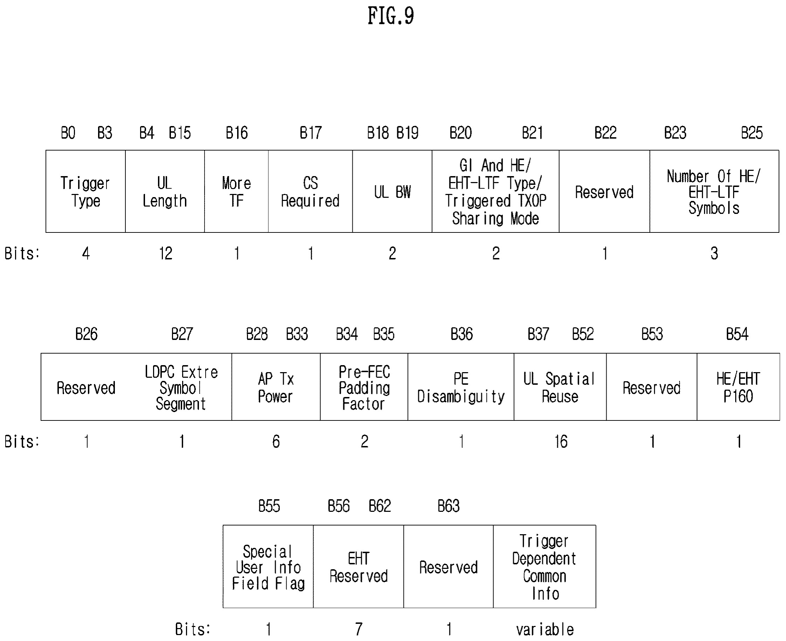

FIG. 9 is a diagram illustrating a format of a common information field within a trigger frame to which the present disclosure may be applied.

Referring to FIG. 9, the EHT variant common information field may include information commonly applied to one or more TB PPDU transmissions requested by a trigger frame.

The EHT variant common information field includes a trigger type subfield that identifies the trigger frame variant.

Table 1 illustrates the encoding of the trigger type subfield.

**[Table 1]**

| **Trigger Type subfield value** | **Trigger frame variant** |
|---|---|
| 0 | Basic |
| 1 | Beamforming Report Poll (BFRP) |
| 2 | MU-BAR |
| 3 | MU-RTS |
| 4 | Buffer Status Report Poll (BSRP) |
| 5 | GCR MU-BAR |
| 6 | Bandwidth Query Report Poll (BQRP) |
| 7 | NDP Feedback Report Poll (NFRP) |
| 8 | Ranging |
| 9-15 | Reserved |

In addition, the EHT variant common information field includes a UL length subfield indicating an L-SIG length (LENGTH) field of a solicited TB PPDU, an additional TF (More TF) subfield indicating whether a subsequent trigger frame (TF) is scheduled, a number Of HE/EHT-LTF symbols subfield indicating EHT-LTF symbols, an LDPC extra symbol segment subfield indicating the status of an LDPC (low-density parity check) symbol segment, an AP transmit power (AP Tx power) subfield indicating the combined transmit power of the AP at the transmit antenna connectors of all antennas used for triggering PPDU transmission, a pre-FEC (forward error correction) padding factor subfield, a PE (packet extension) disambiguity subfield, a UL spatial reuse subfield, a HE/EHT P160 subfield, a special user info field flag subfield, and a trigger dependent common info subfield.

802.11be (EHT) proposed a technique for APs to allocate a portion of the TXOP time to support peer-to-peer (P2P) transmissions. To this end, the TXOP sharing mode subfield (or triggered TXOP sharing mode subfield) within the common info field of the existing MU-RTS frame was defined.

That is, if the trigger type subfield indicates an MU-RTS trigger frame (see Table 1), B20-B21 of the EHT variant common info field are the triggered TXOP sharing mode subfields. Otherwise, they are the GI (guard interval) and HE/EHT-LTF type subfields.

Table 2 illustrates the encoding of the triggered TXOP sharing mode subfield.

**[Table 2]**

| **Triggered TXOP Sharing Mode subfield value** | **Description** |
|---|---|
| 0 | MU-RTS that does not initiate TXS procedure. |
| 1 | MU-RTS that initiates TXS procedure wherein a scheduled STA can only transmit MPDU(s) addressed to its associated AP. |
| 2 | MU-RTS that initiates TXS procedure wherein a scheduled STA can transmit MPDU(s) addressed to its associated AP or addressed to another STA. |
| 3 | Reserved. |

Referring to Table 2, if the triggered TXOP sharing mode subfield in the common info field of an MU-RTS frame transmitted by an AP is set to a non-zero value, the MU-RTS frame indicates an associated non-AP STA that sequentially transmits one or more non-TB PPDUs to allocate time within the acquired TXOP. Otherwise, the triggered TXOP sharing mode subfield is set to 0.

An MU-RTS trigger frame with the triggered TXOP sharing mode subfield set to a non-zero value is referred to as an MU-RTS TXS (TXOP sharing) trigger frame.

If the triggered TXOP sharing mode subfield is set to 1, this indicates that the MU-RTS initiates a TXOP sharing (TXS) procedure, allowing the scheduled STA to transmit only MPDU(s) addressed to the associated AP. That is, it supports transmission of one or more (non-TB) PPDUs to the AP.

If the triggered TXOP sharing mode subfield is 2, it indicates that the MU-RTS initiates a TXS procedure that allows the scheduled STA to transmit MPDU(s) addressed to the associated AP or addressed to another STA. That is, peer-to-peer transmission is also supported.

If the triggered TXOP sharing mode subfield is 3, it is reserved.

The operation using the triggered TXOP sharing mode subfield is as follows.

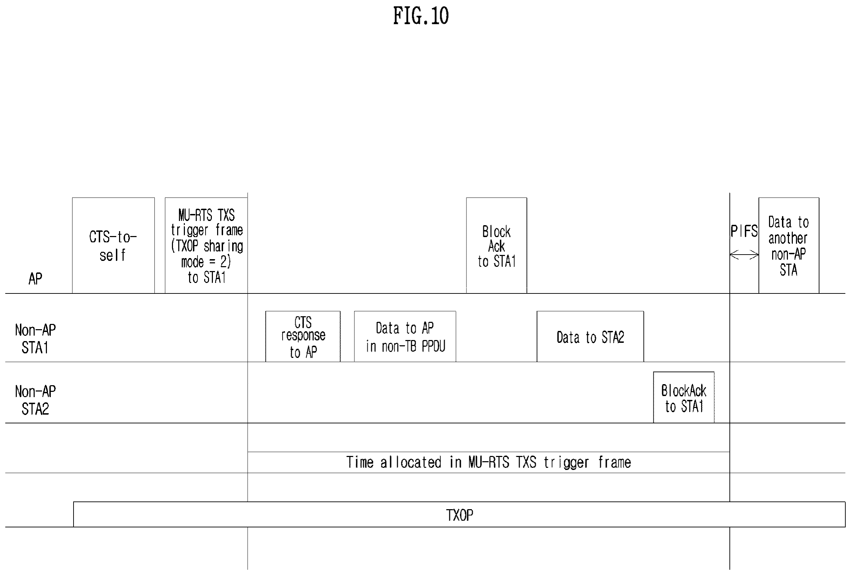

FIG. 10 illustrates a TXOP sharing procedure in a wireless LAN system to which the present disclosure may be applied.

FIG. 10 illustrates an exchange of MU-RTS TXS trigger frames, where an optional CTS-to-Self transmission and a PPDU transmission to the AP and another STA by a scheduled STA within the time allocated by the MU-RTS TXS trigger frame are preceded, when the triggered TXOP sharing mode subfield value is 2.

The AP transmits an MU-RTS TXS trigger frame including time allocation information to STA 1. If STA 1 responds with a CTS (Clear-To-Send) to the AP, STA 1 can transmit data to the AP within a non-TB PPDU and also perform P2P transmission to STA 2 (i.e., transmit data to STA 1). Here, the allocated time is indicated by the user info field in the MU-RTS TXS trigger frame.

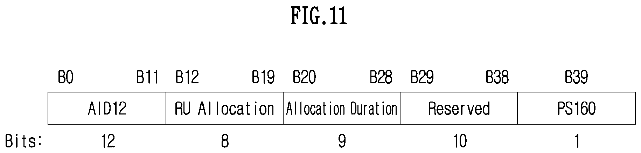

FIG. 11 illustrates a user information field format of an MU-RTS TXS trigger frame to which the present disclosure may be applied.

Referring to FIG. 11, the EHT variant user info field in the MU-RTS TXS trigger frame is composed of an AID12 subfield, an RU allocation subfield, an allocation duration subfield, and a PS160 subfield.

The AID12 subfield basically indicates that it is a user information field for an STA with the corresponding AID.

The RU allocation subfield may indicate the size and location of an RU/MRU. For this purpose, the RU allocation subfield may be interpreted together with the PS160 (primary/secondary 160MHz) subfield of the user information field and the UL BW subfield of the common information field.

The allocation duration subfield indicates the time allocated to a non-AP STA within a TXOP acquired by the AP, in 16 microsecond units.

Here, from the non-AP STA's perspective, the time is applied from the time the PHY-RXEND.indication primitive is issued for the PPDU including the MU-RTS TXS trigger frame.

Meanwhile, some technologies, such as spatial reuse, have been proposed to address issues caused by interference and transmission collisions as the BSSs of multiple APs overlap. However, the need for a definitive solution is increasing. Therefore, if the above-described TXOP sharing mode/procedure is utilized to prevent interference and collisions during multi-AP operation, transmissions within the BSS of each AP can be scheduled differently by time to avoid interfering with each other. In particular, in such a multiple AP environment, a representative AP is required to schedule this.

In the present disclosure, for convenience, an AP that indicates time allocation within a TXOP (and/or indicates multi-AP operation) is referred to as a scheduling AP (SAP), and an AP that is provided with time allocation within a TXOP (and/or participates in multi-AP operation) is referred to as a scheduled AP (DAP). However, this is for convenience of explanation, and an AP that indicatess time allocation within a TXOP (and/or indicatess multi-AP operation) may also be referred to as a representative AP, a master AP, a sharing AP, a primary AP, etc. In addition, an AP that is provided with time allocation within a TXOP (and/or participates in multi-AP operation) may be referred to as a slave AP, a shared AP, a secondary AP, etc.

For example, if the AP in FIG. 10 is replaced with a SAP, non-AP STA 1 with a DAP, and non-AP STA 2 with a non-AP DAP belonging to the BSS of the DAP, it is possible for the DAP to be allocated time within the TXOP acquired by the SAP from the SAP.

An EHT AP can allocate time to only one STA for P2P transmission using a single user info field, as illustrated in FIG. 11. If this field is used in the same manner, the SAP can allocate time to a single DAP for frame exchange with STAs within the DAP's BSS. Therefore, the protocol needs to be modified to support a use case where individual time allocations are made to multiple DAPs.

Therefore, the present disclosure proposes a procedure for multiple APs to allocate time and perform frame exchanges within their respective BSSs. Specifically, it proposes a method for setting frame sequences, time allocation, and a network allocation vector (NAV). The NAV is an indicator maintained by each STA for a time period during which transmission on the wireless medium (WM) is not initiated by the STA, regardless of whether the STA's Clear Channel Assessment (CCA) function detects that the WM is busy.

In the present disclosure, a DAP may include an AP DAP or a non-AP DAP. In addition, in the present disclosure, frame exchange between a DAP and DAPs belonging to the BSS of the DAP at an allocated time is referred to as a BSS frame exchange (FE) of the DAP. The designations (names) used in the description of the present disclosure are for the convenience of description, and the proposed method of the present disclosure is not limited thereto and may be changed to other designations (names).

Embodiment 1: MU-RTS TXS trigger frame + simultaneous CTS response

If extended to multiple APs using the MU-RTS TXS trigger frame (TF), time can be allocated to multiple DAPs by assigning corresponding user info fields to each DAP in the MU-RTS TXS TF transmitted by the SAP, similar to the existing MU-RTS-CTS protocol defined in 802.11ax. In addition, one or more DAPs that receive the MU-RTS TXS TF can simultaneously transmit a CTS to the SAP. This will be described in detail with reference to the drawings.

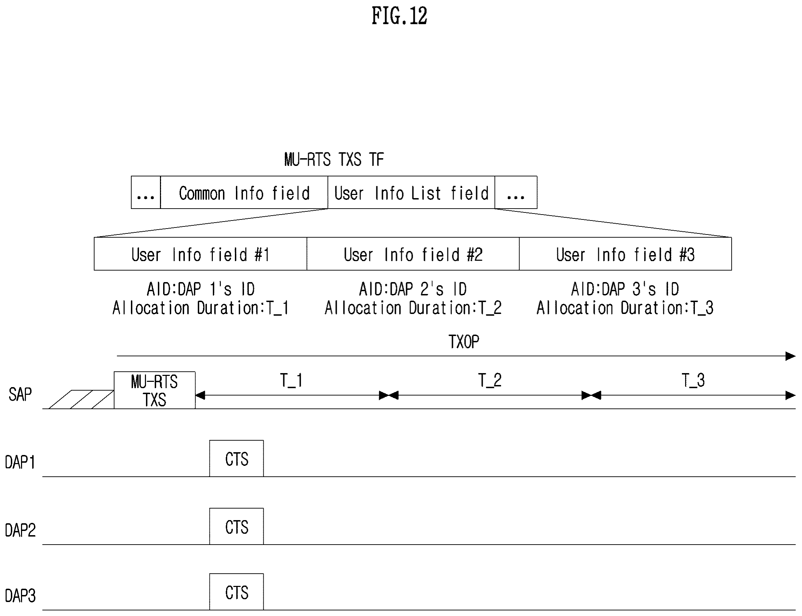

FIG. 12 illustrates a TXOP sharing method according to an embodiment of the present disclosure.

Referring to FIG. 12, a SAP may transmit one MU-RTS TXS TF to multiple DAPs. Here, one MU-RTS TXS TF may include a common info field carrying common information for multiple DAPs and multiple user info fields (user info field #1, user info field #2, user info field #3, etc.) carrying individual information for each DAP. Multiple user info fields may be included in a user info list field. Each user info field may be configured to include a subfield for identifying a DAP (e.g., an AID subfield) and a subfield for indicating an allocated time period (duration) (e.g., an allocation duration subfield).

Here, the names of each field/subfield in the MU-RTS TXS TF are for convenience of explanation, and the present disclosure is not limited thereto, and other names may be used.

Multiple DAPs (or one or more DAPs among the multiple DAPs that wish to participate in TXOP sharing) that have received the MU-RTS TXS TF from the SAP may simultaneously respond with a CTS frame.

In this way, the method/mode by which the SAP allocates time to multiple DAPs within the TXOP acquired by the SAP can be defined as a new mode for TXOP sharing between the SAP and the DAP. For example, the new mode can be indicated/signaled by the triggered TXOP sharing mode subfield (e.g., with a value of 3) or by using a reserved bit in the common info field of the MU-RTS TXS TF (e.g., with a value of 1).

The SAP can allocate time intervals (i.e., T_1, T_2, T_3) to each of the multiple DAPs using the MU-RTS TXS TF. That is, the AID subfield in the user info field #1 can identify DAP 1, and the allocation duration subfield can allocate/signal T_1. Additionally, the AID subfield in user info field #2 may identify DAP 2, and the allocation duration subfield may allocate/indicate T_2. Additionally, the AID subfield in user info field #3 may identify DAP 3, and the allocation duration subfield may allocate/indicate T_3.

When allocating a duration to each DAP, identification of the DAP is required. The existing AID12 subfield cannot be directly used to identify the DAP because it is the association identifier (AID) of a non-AP DAP (i.e., a non-AP STA). Therefore, for example, the BSS color can be used to identify each DAP, or an AID defined between the SAP and the DAP can be used to identify the DAP, or the following methods can be used.

Each AP can transmit a beacon or probe response frame containing one or more of the following information:
- Group ID: This can denote an ID for a group of APs that can operate based on TXOP sharing between the SAP and the DAP. For example, it can have values such as 0, 1, 2, etc.

Additionally, the group ID can be included in the MU-RTS TXS TF by using bits of fields that are not utilized compared to the existing basic TF.
- SAP: It can indicate whether it can operate as SAP.
- AP ID: This can refer to an identifier (ID) assigned within the corresponding group ID, and can have values such as 0, 1, 2, etc.

That is, a set of APs that can operate based on TXOP sharing between SAPs and DAPs is established, and AP(s) that can operate as SAPs within the set can be established. If the AP ID is indicated in the AID subfield within the MU-RTS TXS TF, the remaining bits within the existing AID12 subfield can be reserved.

Here, DAPs must be able to accurately determine the time allocated to them by the SAP. For example, if the allocated time interval (e.g., 16 microseconds) is indicated, as in the allocation duration subfield within the existing MU-RTS TXS TF, each DAP needs to know the exact start point of its allocated time. Therefore, for this purpose, the user info field can basically indicate the time allocated to each DAP in the following way.

As described above, the user info list field of the MU-RTS TXS TF may have multiple user info fields in order to allocate time to multiple DAPs. Here, each user info can allocate time to each DAP, and the time can be calculated/allocated sequentially from the user info field that is allocated/positioned most early (i.e., encoded first) to the user info field that is allocated/positioned most late (i.e., encoded last). That is, a DAP allocated a time duration by a specific user info field can identify the duration allocated to it based on the time duration allocated by the previous user info field of its user info field. In other words, that is, a DAP allocated a time duration by a specific user info field can know the allocation duration from which it starts by adding the time duration allocated by the previous user info field to its user info field.

For example, referring to FIG. 12, since the user info field corresponding to DAP 1 is located at the front, like the existing TXOP sharing procedure for a single user, DAP 1 can perform BSS frame exchange (FE) for a time period of T_1 after receiving MU-RTS TXS TF (i.e., after the end of MU-RTS TXS TF reception). In addition, DAP 2, which has been assigned T_2, recognizes T_2 as the duration allocated to itself after T_1, which is the duration information of the preceding DAP 1 (i.e., after the end of T_1), and can perform BSS frame exchange (FE) for a time period of T_2. In addition, DAP 3, which has been assigned T_3, recognizes T_3 as the duration allocated to itself from after T_1 + T_2 (i.e., from the end of T_1 + T_2), based on the duration information of T_1 and T_2, which are the duration information of the preceding DAP 1 and DAP 2, and can perform BSS frame exchange (FE) during the time of T_3.

While the proposed method described above can be fundamentally designed simply from a multi-user (MU) perspective, several issues may exist:
i) When decoding the user info list field, each DAP needs to decode the allocation duration in the user info field, even if it is not its own AID, before identifying the user info field in which its ID is recognized.
ii) Depending on the channel condition, some DAPs may not respond (with a CTS) to the MU-RTS TXS TF. For example, in FIG. 12, if DAP 2 does not respond with a CTS due to a busy channel, the channel between T_1 and T_3 may be wasted because T_2 is ultimately an inactive duration.
iii) If a particular DAP completes all transmissions (i.e., frame exchanges) and returns TXOPs to the SAP before the allocated time expires, the channel may be wasted for the remaining time.

In order to resolve issues such as i) and ii) above, it is necessary for SAP to notify other DAPs to which a time duration has been allocated, and the following method can be applied. That is, the method described below can be applied in combination (i.e., together) with the proposed method described above.

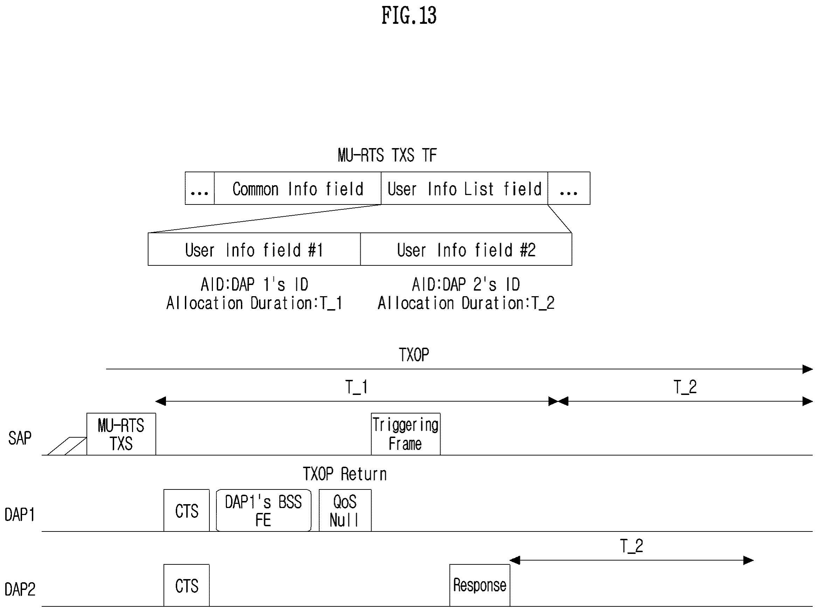

FIG. 13 illustrates a TXOP sharing method according to an embodiment of the present disclosure.

Referring to FIG. 13, a SAP may transmit an MU-RTS TXS TF to multiple DAPs. As shown in FIG. 12, the MU-RTS TXS TF may include a common info field that carries common information for multiple DAPs and multiple user info fields (user info field #1, user info field #2, etc.) that carry individual information for each DAP. Multiple user info fields may be included in a user info list field. Each user info field may be configured to include a subfield for identifying a DAP (e.g., an AID subfield) and a subfield for indicating an allocated time duration (e.g., an allocation duration subfield).

FIG. 13 illustrates a case where DAP 1 terminates/returns its allocated time period to the SAP because it has no more frames to transmit during the allocated time period.

If there are no more frames to transmit or receive during the allocated time interval, the DAP may return the remainder of the allocated time interval to the SAP (referred to as a TXOP return).

For example, a QoS null frame, as shown in FIG. 13, may be used for TXOP return.

The type subfield and the subtype subfield in the frame control field in the MAC header within the frame can identify the function of the frame together, and when the most significant bit B7 of the subtype subfield within the data frames is set to 1, it indicates a QoS data subtype (i.e., a QoS data frame). A QoS data frame can include a QoS control field in the MAC header, and a QoS null frame refers to a QoS data frame with an empty frame body. The QoS control field not only identifies the traffic category (TC) or traffic stream (TS) to which the frame belongs, but also identifies various QoS-related, A-MSDU (aggregate MAC service data unit)-related, and mesh-related information for the frame that varies depending on the frame type, subtype, and transmitting STA type.

As described above, when a QoS null frame is used for TXOP return, the RDG (reverse direction grant)/More PPDU subfield of the HT control field in the MAC header can be set to 0 to indicate TXOP return.

Here, DAP 2 may not recognize the TXOP return of DAP 1 and may wait until T_2 starts since it is not yet the time when T_2 starts. However, since the channel is wasted during the time in between, the SAP may transmit a frame that triggers DAP 2 to perform BSS frame exchange (FE). That is, the SAP may trigger the DAP(s) by transmitting a triggering frame (i.e., separately from the MU-RTS TXS TF) to one or more DAPs to which a duration was assigned after the DAP that returned the TXOP by the MU-RTS TXS TF.

Here, a control frame or a QoS data/null frame may be used as an example of the triggering frame.

As an example of a control frame, the MU-RTS TXS TF can be reused as a triggering frame. For example, this form can be the same as a method of allocating time to a single user (when only one DAP remains after the TXOP is returned, as in FIG. 13). Here, in the example of FIG. 13, the information about T_2 can be changed to a different time (compared to the initially allocated time). Furthermore, since this operation occurs during a TXOP, and the MU-RTS TXS TF changes the pre-allocated time, a separate mode can be configured for this. For example, the reserved value (i.e., 3) in the TXOP Sharing mode field in Table 2 or the reserved bit in the common info field can be used to indicate this mode.

In addition, since a triggering frame can be transmitted individually to DAP 2 (when only one DAP remains after TXOP return as in FIG. 13), a QoS Data/Null frame can be utilized, and for example, allocation time information can be transmitted in the A-control (aggregated control) field of the MAC header of the QoS Data/Null frame. In this case, one type of the A-control field is newly defined to include the allocation duration subfield of FIG. 11, and additionally, the RU allocation and/or PS160 subfields may be further included (for example, when the RU allocation is changed).

Meanwhile, if the RU location information or time allocation information does not change, a QoS Data/Null frame that does not include information such as the A-control field as a triggering frame or an RTS frame as a control frame may be used to reduce signaling overhead. In this case, since DAP 2 receiving this has already been allocated time through the MU-RTS TXS TF, it can recognize this and immediately begin transmission.

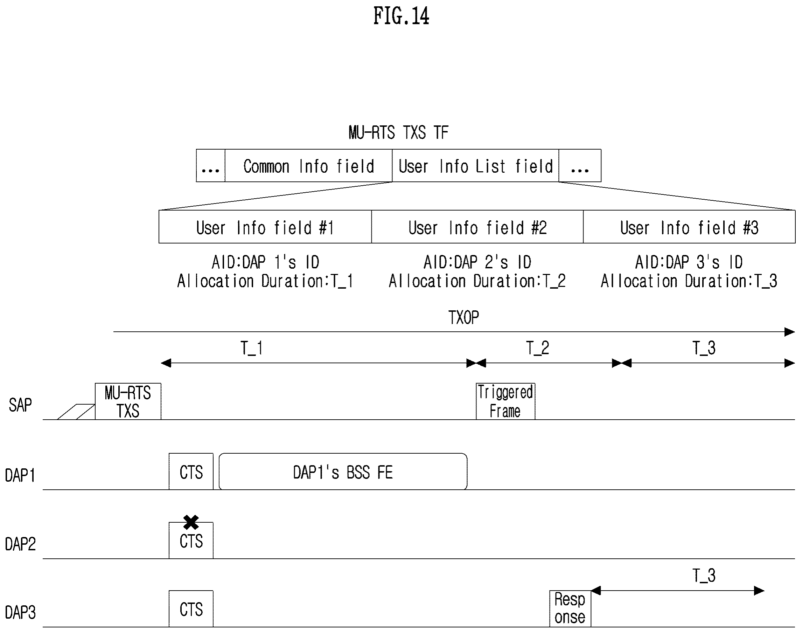

FIG. 14 illustrates a TXOP sharing method according to an embodiment of the present disclosure.

Referring to FIG. 14, a SAP can transmit an MU-RTS TXS TF to multiple DAPs. As shown in FIG. 12, the MU-RTS TXS TF can include a common info field that carries common information for multiple DAPs and multiple user info fields (user info field #1, user info field #2, user info field #3, etc.) that carry individual information for each DAP. Multiple user info fields can be included in a user info list field. Each user info field can be configured to include a subfield for identifying the DAP (e.g., an AID subfield) and a subfield for indicating an allocated time duration (e.g., an allocation duration subfield).

FIG. 14 illustrates a case where DAP 2 fails to respond to the CTS, leaving the channel empty for time T_2.

In this case, since the channel is wasted during time T_2, the SAP can transmit a frame that triggers DAP 3 to perform a BSS frame exchange (FE). As mentioned in the example above, a control frame or a QoS data/null frame can be used as the triggering frame.

As an example of a control frame, the MU-RTS TXS TF can be reused as the triggering frame. For example, this can be the same as allocating time to a single user (when only one DAP remains after the empty allocation time, as shown in FIG. 14). In the example of FIG. 14, the information for T_3 can be changed to a different time (compared to the initially allocated time). Furthermore, since this operation occurs during a TXOP, and the MU-RTS TXS TF changes the pre-allocated time, a separate mode can be configured for this. For example, to indicate this mode, a reserved value (i.e., 3) of the TXOP Sharing mode field in Table 2 may be used, or a reserved bit of common Info may be used.

In addition, since a triggering frame can be transmitted individually to DAP 3 (when only one DAP remains after an empty allocation time, as in FIG. 14), a QoS Data/Null frame can be utilized, and for example, allocation time information can be transmitted in the A-control (aggregated control) field of the MAC header of the QoS Data/Null frame. In this case, one type of the A-control field can be newly defined to include the allocation duration subfield of FIG. 11, and additionally, the RU allocation and/or PS160 subfields can be further included (for example, when the RU allocation is changed).

On the other hand, if the RU location information or time allocation information does not change, the QoS Data/Null frame and the RTS frame, which is a control frame, can be transmitted without information such as A-control to reduce signaling overhead. At this time, the DAP receiving this can recognize it and start transmitting immediately because it has already been allocated through the MU-RTS TXS TF.

### Embodiment 2: MU-RTS TXS trigger frame + CTS response for each DAP

Unlike transmitting trigger frames to multiple DAPs simultaneously, as in the aforementioned Embodiment 1, time can be allocated to each DAP using individual trigger frames within a single TXOP acquired by the SAP, as illustrated in FIGS. 13 and 14 . This will be described in detail with reference to the drawings.

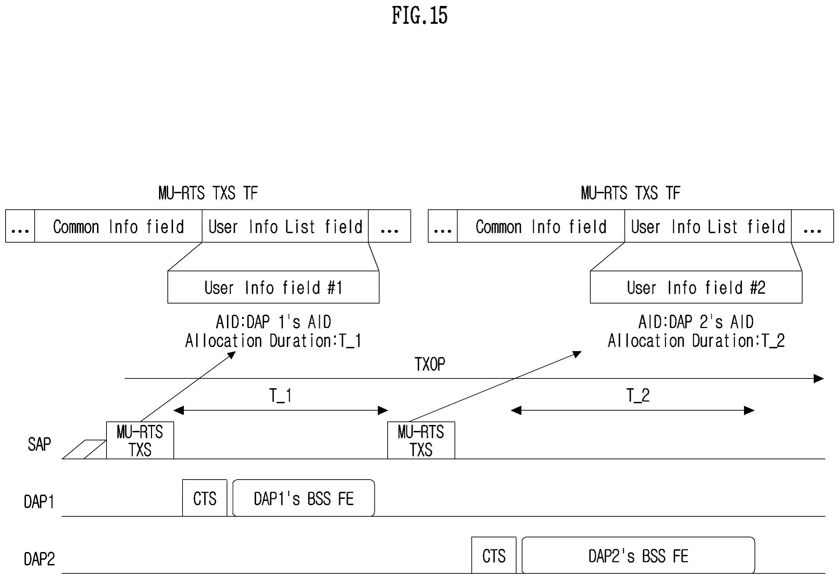

FIG. 15 illustrates a TXOP sharing method according to an embodiment of the present disclosure.

Referring to FIG. 15 , the SAP can individually transmit MU-RTS TXS TFs to multiple DAPs. Here, each MU-RTS TXS TF may include a common info field carrying common information for a DAP (or multiple DAPs) and a user info field carrying individual information for a DAP. The user info field may be included within a user info list field. Each user info field may be configured to include a subfield for identifying the DAP (e.g., an AID subfield) and a subfield for indicating the allocated time period (duration) (e.g., an allocation duration subfield).

Here, the names of each field/subfield within the MU-RTS TXS TF are for convenience of explanation, and the present disclosure is not limited thereto, and other names may be used.

In this way, the method/mode by which the SAP allocates time to multiple DAPs within the TXOP acquired by the SAP can be defined as a new mode for TXOP sharing between the SAP and the DAPs. For example, the new mode can be indicated/signaled by the triggered TXOP sharing mode subfield (e.g., indicated by a value of 3) or by using a single reserved bit (e.g., indicated by a value of 1) within the common info field of the MU-RTS TXS TF.

FIG. 15 illustrates a method for sequentially allocating time for BSS FE for each DAP using MU-RTS TXS TF. That is, SAP can allocate time for BSS FE to the next DAP by transmitting MU-RTS TXS TF when BSS FE is terminated during the allocated time of each DAP in one TXOP acquired by SAP. For example, when BSS FE operation of DAP 1 is terminated, AP transmits MU-RTS TXS TF to allocate T_2 to DAP 2, and DAP 2, which receives this, can perform BSS FE operation after CTS response.

SAP can allocate time intervals (i.e., T_1, T_2, T_3) to each of multiple DAPs using individual MU-RTS TXS TFs. That is, the AID subfield in the user info field #1 of the first MU-RTS TXS TF can identify DAP 1, and the allocation duration subfield can allocate/indicate T_1. In addition, the AID subfield in the user info field #2 of the second MU-RTS TXS TF can identify DAP 2, and the allocation duration subfield can allocate/indicate T_2. In addition, the AID subfield in the user info field #3 of the third MU-RTS TXS TF can identify DAP 3, and the allocation duration subfield can allocate/indicate T_3.

As described above, when allocating a time duration to each DAP, identification of the DAP is required. Here, the existing AID12 subfield cannot be directly used to identify the DAP because it is an AID of a non-AP DAP (i.e., a non-AP STA). Therefore, for example, BSS colors can be used to identify each DAP, or an AID defined between the SAP and the DAP can be used to identify the DAP, or the method of Embodiment 1 described above can be used.

Here, the DAPs must be able to know exactly when the time allocated to them by the SAP is. For example, if the allocated duration subfield in the existing MU-RTS TXS TF indicates the allocated duration (e.g., in 16 us units), each DAP needs to know exactly when the allocated time begins. In this case, the allocation time may be applied from the time the PHY-RXEND.indication primitive is issued for the PPDU including the MU-RTS TXS trigger frame.

In addition, for example, if an issue occurs such as a DAP performing a TXOP return during a frame exchange operation as in FIG. 13 or a TX/RX not being performed (for example, not receiving a CTS response from the DAP as in FIG. 14), the AP can allocate time by transmitting an MU-RTS TXS TF to the next DAP. Since the method described in FIG. 13 and/or FIG. 14 can be used for this, a detailed description thereof is omitted.

The method of Embodiment 1 above can basically allocate time at once, thereby reducing the overhead of transmitting trigger frames compared to Embodiment 2, which transmits trigger frames multiple times. Furthermore, even if issues such as B and C occur, they can be immediately recovered by triggering the next DAP through a simple QoS Null or RTS transmission. However, if such issues occur frequently, the method of Embodiment 2 can individually allocate time for BSS FE operation by transmitting an MU-RTS TXS TF per DAP.

Furthermore, the methods of Embodiments 1 and 2 above can be combined and performed. This will be described in detail with reference to the drawings.

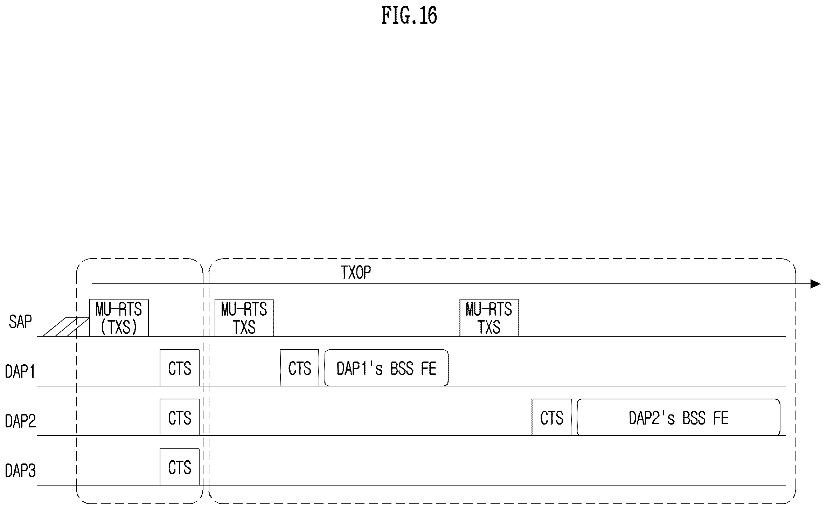

FIG. 16 illustrates a TXOP sharing method according to an embodiment of the present disclosure.

Referring to FIG. 16, a SAP may transmit a single first MU-RTS TXS TF to multiple DAPs, as in the method of Embodiment 1. That is, the first MU-RTS TXS TF may correspond to an operation for announcing that a TXOP acquired by the SAP is shared with multiple DAPs.

Here, the first MU-RTS TXS TF may include a common info field carrying common information for multiple DAPs and multiple user info fields (user info field #1, user info field #2, user info field #3, etc.) carrying individual information for each DAP. The multiple user info fields may be included in a user info list field. Each user info field may include a subfield (e.g., an AID subfield) for identifying a DAP. Additionally, each user info field may be configured to include a subfield (e.g., an allocation duration subfield) to indicate the time interval (duration) allocated to each DAP.

Multiple DAPs (or one or more DAPs among the multiple DAPs that wish to participate in TXOP sharing) that have received an MU-RTS TXS TF from the SAP may simultaneously respond with a CTS frame.

Thereafter, the SAP may individually transmit secondary MU-RTS TXS TFs to the multiple DAPs that transmitted the CTS, as in the method of Embodiment 2. In FIG. 16, it is assumed that DAP 1, DAP 2, and DAP 3 have all transmitted the CTS. Here, each secondary MU-RTS TXS TF may include a common info field that carries common information for a single DAP (or multiple DAPs) and a user info field that carries individual information for a single DAP. The user info field may be included in a user info list field. Each user info field may be configured to include a subfield for identifying the DAP (e.g., an AID subfield) and a subfield for indicating the allocated time period (duration) (e.g., an allocation duration subfield).

Here, the names of each field/subfield within the MU-RTS TXS TF are for convenience of explanation, and the present disclosure is not limited thereto, and other names may be used.

In this way, the method/mode by which the SAP allocates time to multiple DAPs within the TXOP acquired by the SAP can be defined as a new mode for TXOP sharing between the SAP and the DAPs. For example, the new mode can be indicated/signaled by using the triggered TXOP sharing mode subfield (e.g., indicated by a value of 3) or by using a single reserved bit (e.g., indicated by a value of 1) within the common info field of the MU-RTS TXS TF.

In FIG. 16, the first MU-RTS TXS TF can play a role in protecting the TXOP acquired by the SAP when sharing the TXOP with multiple DAPs, and can also play a role in confirming/identifying the DAPs participating in the TXOP sharing procedure. Accordingly, the SAP can allocate time by transmitting the second MU-RTS TXS TF only to the DAPs that transmitted the CTS for the first MU-RTS TXS TF.

In addition, for example, if an issue occurs, such as a DAP performing a TXOP return during a frame exchange operation, or if there is no TX/RX, as shown in FIG. 13, the AP can allocate time by transmitting an MU-RTS TXS TF to the next DAP. Since the method described in FIG. 13 can be used for this, a detailed description is omitted.

### Embodiment 4: NAV Setting Method

In the methods of Embodiments 1 to 3 described above, since frame transmission by each DAP is performed within the TXOP acquired by the SAP, a method for setting the duration of each DAP's frame (i.e., setting the duration field value in the frame's MAC header) is required. Any one of the following methods, or a combination of multiple methods, may be used.

A. A DAP that has been allocated a time for frame exchange within the BSS by the SAP can set the duration of the transmitted frame (i.e., the value of the duration field) up to the TXOP ending time of the SAP. Specifically, the duration (i.e., the value of the duration field) is set from the transmission end point of the frame transmitted by each DAP to the TXOP ending point of the SAP.

This prevents channel access from other STAs for which a NAV has been set due to the TXOP within the TXOP of the SAP. In other words, the frame exchange operations within the BSS of multiple DAPs can be efficiently protected.

1) The DAP may not be able to transmit frames to the SAP because the SAP has set the basic NAV. In other words, even if the SAP sends a trigger frame to the DAP, the SAP sets the basic NAV because the DAP and SAP are different BSSs.

STAs and APs can maintain intra-BSS NAVs and basic NAVs. The intra-BSS NAV is updated by intra-BSS PPDUs. The basic NAV is updated by inter-BSS PPDUs or PPDUs that cannot be classified as intra-BSS or inter-BSS. Intra-BSS PPDUs and inter-BSS PPDUs are defined by the 802.11 standard. Maintaining two NAVs in this way is effective in densely distributed scenarios where an STA needs to protect itself from frames transmitted by STAs within its own BSS (i.e., intra-BSS) and wants to avoid interference from frames transmitted by STAs in neighboring BSSs (i.e., inter-BSS).

To address the above issue, a DAP can ignore the Basic NAV set by the SAP. The DAP can ignore the Basic NAV set by the SAP by recognizing that the SAP belongs to the same Group as the DAP (e.g., by recognizing the Group ID) and/or that the trigger frame is addressed to the DAP via the user info field.

Meanwhile, the DAP may be affected by the Basic NAV due to frame transmissions by other DAPs or STAs associated with other DAPs, but this Basic NAV may not be greater than the Basic NAV from the SAP, so it may not be affected.

2) When an STA associated with each DAP performs frame exchange operations within its BSS, if a Basic NAV is set by the SAP, the STA may not be able to transmit frames. For example, when a DAP transmits a trigger frame (to distinguish it from the MU-RTS TXS trigger frame, the trigger frame transmitted to the DAP and the STA within the DAP's BSS is referred to as a "DAP trigger frame" hereinafter), the STA receiving the DAP trigger frame may not be able to transmit a UL response.

To address the above issue, the STA associated with each DAP may ignore the Basic NAV set by the SAP. To this end, the DAP may notify the STA within the DAP trigger frame that it has been allocated time from the SAP.
i) The DAP may transmit a group ID within the DAP trigger frame to indicate whether it is in the same group as the SAP. For example, the DAP may transmit the group ID and whether the DAP trigger frame is transmitted via the TXOP sharing procedure in the common info field or the special user info field of the DAP trigger frame.
ii) And/or, the DAP may transmit BSSID or AP ID information for the SAP within the DAP trigger frame. For example, this information may be included in the address field of the MAC header (e.g., the Address 3/4 field), a new A-Control type, or the Special User Info field of the DAP trigger frame.

B. A DAP allocated time for P2P from a SAP can only set the duration of the transmitted frame (i.e., the value of the duration field) up to the end of the period/time for frame exchange with STA(s) belonging to its BSS. Specifically, the duration can be set from the end of the transmission of the frame transmitted by the DAP to the end of the interval/time for frame exchange with the STA(s).

In this case, the STA(s) that received the DAP trigger frame from the DAP can set the duration (i.e., the value of the duration field) in the frame that it transmits based on the duration of the DAP associated with the DAP (i.e., the value of the duration field in the DAP trigger frame). Here, the CTS frame transmitted by the STA performing the first or subsequent BSS frame exchange including the first may also follow the duration setting method described above.

In this case as well, the above-described operation 1) and/or operation 2) may be equally applied.

This method may avoid any impact on the frame exchange operations of each BSS. In addition, since the entire TXOP acquired by the SAP is not protected, an STA for which the NAV has not been set by the SAP may access the channel and transmit frames during the process (e.g., in the event of a BSS frame exchange operation or a frame transmission failure between the SAP and the DAP, etc.).

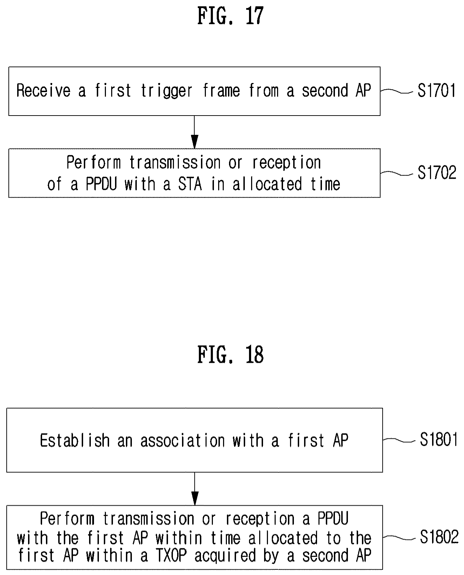

FIG. 17 illustrates an operation of an access point for a TXOP sharing method according to an embodiment of the present disclosure.

FIG. 17 illustrates the operation of an AP device based on the previously proposed methods. The example in FIG. 17 is provided for convenience of explanation and does not limit the scope of the present disclosure. Some of the step(s) illustrated in FIG. 17 may be omitted depending on circumstances and/or settings.

Referring to FIG. 17, a first AP (e.g., a scheduled AP, a slave AP, a shared AP, a secondary AP) receives a first trigger frame from a second AP (e.g., a scheduling AP, a master AP, a shared AP, a primary AP) (S1701).

Here, the first trigger frame may include information for the time allocated to the first AP within the TXOP acquired by the second AP.

For example, the first trigger frame may correspond to an MU-RTS TXS trigger frame according to Embodiments 1 to 4. In addition, the first trigger frame may include a common info field and a user info field. In addition, the user info field may include information for identifying the first AP and information for the duration allocated to the first AP.

In addition, after the allocated time to the first AP expires, time may be allocated to another AP other than the first AP within the TXOP acquired by the second AP through a trigger frame other than the first trigger frame.

Meanwhile, although not illustrated in FIG. 17, the first AP may transmit a CTS (Clear-To-Send) frame to the second AP in response to the first trigger frame.

In addition, although not illustrated in FIG. 17, the second AP may be indicated to initiate a procedure for sharing a TXOP acquired by the second AP by a third trigger frame prior to the first trigger frame. In this case, in response to the third trigger frame, a CTS frame may be simultaneously transmitted by one or more APs, including the first AP, and the TXOP time acquired by the second AP may be allocated to the one or more APs that transmitted the CTS frame.

Within the allocated time, the first AP transmits or receives a PPDU with an STA (i.e., an STA within the BSS of the first AP, an STA associated with the first AP) (S1702).

Here, the duration of the PPDU (i.e., the value of the duration field in the MAC header of the frame included in the PPDU) may be set to the time from the end of the PPDU to the end of the allocated time to the AP.

Additionally, the basic NAV maintained by the first AP and/or the STA may not be updated due to the first trigger frame. That is, the first AP and/or the STA may ignore the NAV setting by the first trigger frame.

For example, if the first trigger frame includes a group ID for a group to which the first AP and the second AP belong, and the first trigger frame is addressed to the first AP, a basic NAV maintained by the first AP may not be updated due to the first trigger frame. As another example, a basic NAV maintained by the STA may not be updated due to the first trigger frame based on the fact that a second trigger frame (i.e., a trigger frame that triggers UL transmission of the STA) from the first AP includes i) a group ID for a group to which the first AP and the second AP belong, and ii) a BSSID or AP ID for the second AP.

Additionally, based on the completion of frame exchange within the BSS of the first AP before the allocated time expires for the first AP, the remaining time within the allocated time may be returned to the second AP.

The method described in the example of FIG. 17 may be performed by the first device (100) of FIG. 1. For example, one or more processors (102) of the first device (100) of FIG. 1 may be configured to receive a trigger frame via the transceiver(s) (106) and perform PPDU exchange with another device. Furthermore, one or more memories (104) of the first device (100) may store commands for performing the method described in the example of FIG. 17 or the examples described above when executed by one or more processors (102).

FIG. 18 illustrates an operation of a station for a TXOP sharing method according to an embodiment of the present disclosure.

FIG. 18 illustrates the operation of an STA device based on the previously proposed methods. The example in FIG. 18 is provided for convenience of explanation and does not limit the scope of the present disclosure. Some of the steps illustrated in FIG. 18 may be omitted depending on circumstances and/or settings.

Referring to FIG. 18, an STA establishes an association with a first AP (e.g., a scheduled AP, a slave AP, a shared AP, a secondary AP) (S1801).

For this purpose, the operations described in FIG. 3 may be utilized.

The STA transmits or receives a PPDU with the first AP within the time allocated to the first AP within the TXOP acquired by the second AP (e.g., a scheduling AP, a master AP, a shared AP, a primary AP) (S1802).

Here, the first AP may be allocated time by receiving a first trigger frame from the second AP. That is, the first trigger frame may include information for the time allocated to the first AP within the TXOP acquired by the second AP.

For example, the first trigger frame may correspond to an MU-RTS TXS trigger frame according to Embodiments 1 to 4. In addition, the first trigger frame may include a common info field and a user info field. In addition, the user info field may include information for identifying the first AP and information for the duration allocated to the first AP.

In addition, after the allocated time to the first AP expires, time may be allocated to another AP other than the first AP within the TXOP acquired by the second AP through a trigger frame other than the first trigger frame.

Meanwhile, although not shown in FIG. 18, the first AP may transmit a CTS (Clear-To-Send) frame to the second AP in response to the first trigger frame.

In addition, although not illustrated in FIG. 18, the second AP may be indicated to initiate a procedure for sharing a TXOP acquired by the second AP by a third trigger frame prior to the first trigger frame. In this case, in response to the third trigger frame, a CTS frame may be simultaneously transmitted by one or more APs, including the first AP, and the TXOP time acquired by the second AP may be allocated to the one or more APs that transmitted the CTS frame.

In addition, the duration for the PPDU that the STA transmits and receives with the first AP (i.e., the value of the duration field in the MAC header of the frame included in the PPDU) may be set to the time from the end of the PPDU to the end of the time allocated to the AP.

Additionally, the basic NAV maintained by the first AP and/or the STA may not be updated due to the first trigger frame. That is, the first AP and/or the STA may ignore the NAV setting by the first trigger frame.

For example, if the first trigger frame includes a group ID for a group to which the first AP and the second AP belong, and the first trigger frame is addressed to the first AP, a basic NAV maintained by the first AP may not be updated due to the first trigger frame. As another example, a basic NAV maintained by the STA may not be updated due to the first trigger frame based on the fact that a second trigger frame (i.e., a trigger frame that triggers UL transmission of the STA) from the first AP includes i) a group ID for a group to which the first AP and the second AP belong, and ii) a BSSID or AP ID for the second AP.

Additionally, based on the completion of frame exchange within the BSS of the first AP before the allocated time expires for the first AP, the remaining time within the allocated time may be returned to the second AP.

The method described in the example of FIG. 18 may be performed by the second device (200) of FIG. 1. For example, one or more processors (202) of the second device (200) of FIG. 1 may be configured to perform PPDU exchange with other devices via transceiver(s) (206). Furthermore, one or more memories (204) of the second device (200) may store commands for performing the method described in the example of FIG. 18 or the examples described above when executed by one or more processors (202).

In conventional wireless LAN systems, TXOP acquired by an AP is shared only for transmission by STAs. However, in contrast, according to the TXOP sharing method according to the examples of the present disclosure, TXOP acquired by an AP can be shared with other APs. Accordingly, by transmitting and receiving low-latency traffic, latency can be reduced, and the effect of increasing wireless communication efficiency can be achieved.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Availability]

A method proposed by the present disclosure is mainly described based on an example applied to an IEEE 802.11-based system, 5G system, but may be applied to various WLAN or wireless communication systems other than the IEEE 802.11-based system.

## Claims

1. A method performed by a first access point (AP) in a wireless local area network (WLAN) system, the method comprising:
receiving a first trigger frame from a second AP, wherein the first trigger frame includes information for time allocated to the first AP within a transmission opportunity (TXOP) acquired by the second AP; and
transmitting or receiving a physical protocol data unit (PPDU) with a station (STA) within the allocated time,
wherein a duration of the PPDU is configured to time from an end of the PPDU to an end of the allocated time.

2. The method of claim 1, wherein a basic network allocation vector (NAV) maintained by the first AP and/or the STA is not updated due to the first trigger frame.

3. The method of claim 2, wherein, based on the first trigger frame including a group identifier (ID) for a group to which the first AP and the second AP belong and the first trigger frame being addressed to the first AP, a basic NAV maintained by the first AP is not updated due to the first trigger frame.

4. The method of claim 2, wherein, based on a second trigger frame transmitted by the first AP to the STA including i) a group identifier (ID) for a group to which the first AP and the second AP belong and ii) a basic service set identifier (BSSID) or AP ID for the second AP, a basic NAV maintained by the STA is not updated due to the first trigger frame.

5. The method of claim 1, further comprising:
transmitting a clear-to-send (CTS) frame to the second AP in response to the first trigger frame.

6. The method of claim 1, wherein after the allocated time expires, time is allocated to an AP other than the first AP within the TXOP acquired by the second AP through a trigger frame other than the first trigger frame.

7. The method of claim 1, wherein, based on completion of frame exchange within a basic service set (BSS) of the first AP before the allocated time expires, remaining time within the allocated time is returned to the second AP.

8. The method of claim 1, wherein a third trigger frame prior to the first trigger frame indicates that a procedure for sharing the TXOP acquired by the second AP is initiated.

9. The method of claim 8, wherein CTS frames are simultaneously transmitted by one or more APs, including the first AP, in response to the third trigger frame, and
wherein the TXOP time acquired by the second AP is allocated to the one or more APs that transmitted the CTS frames.

10. A first access point (AP) device in a wireless local area network (WLAN) system, the device comprising:
at least one transceiver; and
at least one processor connected to the at least one transceiver,
wherein the at least one processor configured to:
receive a first trigger frame from a second AP, wherein the first trigger frame includes information for time allocated to the first AP within a transmission opportunity (TXOP) acquired by the second AP; and
transmit or receiving a physical protocol data unit (PPDU) with a station (STA) within the allocated time,
wherein a duration of the PPDU is configured to time from an end of the PPDU to an end of the allocated time.

11. A method performed by a station (STA) in a wireless local area network (WLAN) system, the method comprising:
establishing an association with a first access point (AP); and
performing transmission or reception of a physical protocol data unit (PPDU) with the first AP within time allocated to the first AP within a transmission opportunity (TXOP) acquired by the second AP,
wherein a duration of the PPDU is configured to time from an end of the PPDU to an end of the allocated time.

12. A station (STA) device in a wireless local area network (WLAN) system, the device comprising:
at least one transceiver; and
at least one processor connected to the at least one transceiver,
wherein the at least one processor configured to:
establish an association with a first access point (AP); and perform transmission or reception of a physical protocol data unit (PPDU) with the first AP within time allocated to the first AP within a transmission opportunity (TXOP) acquired by the second AP,
wherein a duration of the PPDU is configured to time from an end of the PPDU to an end of the allocated time.

13. A processing device configured to control an access point (AP) in a wireless local area network (WLAN) system, the processing device comprising:
at least one processor; and
at least one computer memory operably connected to the at least one processor, and based on being executed by the at least one processor, storing instructions for performing a method according to any one claim of claim 1 to claim 9.

14. At least one non-transitory computer-readable medium storing at least one instruction, wherein:
the at least one instruction controls a device to perform a method according to any one claim of claim 1 to claim 9 in a wireless local area network (WLAN) system by being executed by at least one processor.
